# FASCICULE DE BREVET EUROPEEN

(11) **EP 1 545 221 B1**
(45) Date de publication et mention de la délivrance du brevet: **12.10.2011**
(21) Numéro de dépôt: 03753672.9
(22) Date de dépôt: 12.08.2003
(51) Int. Cl.: A21B 1/48, A21B 1/26

(54) **FOUR MODULAIRE POUR PRODUITS ALIMENTAIRES À BASE DE PÂTE CÉRÉALIÈRE**
OFEN IN MODULARER BAUART FÜR NAHRUNGSMITTEL AUF BASIS VON GETREIDETEIG
MODULAR OVEN FOR CEREAL-PASTE BASED FOODSTUFFS

(30) Priorité: 23.09.2002 FR 0211727
(43) Date de publication de la demande: 29.06.2005
(73) Titulaire: Generale Biscuit, 94150 Rungis (FR)
(72) Inventeur: MONNY DIMOUAMOUA, Martin, F-91170 Viry Chatillon (FR)
(74) Mandataire: Jacquard, Philippe Jean-Luc
(86) Numéro de dépôt international: PCT/FR2003/002513
(87) Numéro de publication internationale: WO 2004/026034

(56) Documents cités:
- EP-A- 0 859 199
- WO-A-01/80649
- WO-A-89/00393
- FR-A- 752 087
- FR-A- 967 192
- US-A- 3 908 533
- US-A- 4 473 004
- US-A- 4 479 776
- US-A- 4 751 877
- US-A- 5 075 120

## Description

Les fours utilisés pour la cuisson des produits à base de pâte céréalière, varient suivant les types spécifiques de produits à cuire. Il n'existe pas actuellement de four standard permettant de cuire tous les types de produits de manière satisfaisante.

Ainsi, pour les « crackers » et pour les produits moelleux, tels que les génoises, on utilise généralement des fours à gaz à flamme directe dits « DGF ».

Pour les pâtes rotatives ou les pâtes extrudées dites coupe-fil, on utilise des fours cyclothermes ou à convection forcée, mais aussi des fours « DGF ».

Cependant, les résultats de cuisson optimum ne pouvaient être obtenus qu'en utilisant respectivement des fours « DGF » pour les « crackers » et les produits moelleux et des fours cyclothermes ou à convection forcée pour les pâtes rotatives ou coupe-fil et en ajustant de manière quasi définitive la configuration précise de chaque four pour chaque produit.

Les fours « DGF » présentent dans leur conception actuelle des inconvénients tels que :
- la pollution possible des aliments par les produits de combustion,
- les difficultés de régulation de la cuisson,
- et enfin des problèmes de maintenance des brûleurs. Par exemple avec des brûleurs de type Venturi, un retour de flux de chaleur vers le brûleur est possible, ce qui endommage celui-ci lorsque ce dernier est mal dimensionné.

En convection forcée, dans les fours actuels, l'énergie apportée par le flux d'air chauffé est dissipée essentiellement sous forme de flux convectif.

A une température plus élevée, l'énergie pourrait être également ou principalement dissipée en un flux radiatif. Ceci dépent de la température, du débit et de la vitesse du flux.

En convection forcée, il n'existe pas de four dans lesquels, la température de la chambre de cuisson puisse atteindre des températures comprises entre 350 et 400°C avec une vitesse d'air inférieure ou égale à 0,5 m/s. Or, c'est ce qu'il faudrait pour obtenir un flux radiatif important pour la cuisson de certains « soda » crackers. D'autre part, les vitesses nécessaires dans les fours actuels sont de 3 à 6 m/s (en sortie de buse). Or, de telles vitesses ne permettent pas la cuisson de produits légers qui se trouvent soufflés par le flux d'air à l'intérieur du four.

Il existe également des fours dits "à impigement" qui sont des fours à convection forcée avec des vitesses d'air supérieures ou égales à 20 m/s.

On connaît de la demande PCT WO 89/00393 A (Bellas Inc.) un four modulaire de ce type qui comporte des modules élémentaires en cascade.

Il n'existe pas non plus de four mixte « DGF » /Convection forcée dans lesquels on puisse moduler les quantités d'énergies fournies par chacun des deux modes de manière maîtrisée dans le même module.

L'objet de la présente invention est un four permettant de pallier au moins un des inconvénients qui ont été énumérées, et aussi de dépasser les limitations de chacun des fours actuels en permettant à l'industriel d'ajuster de manière optimale les types d'énergies fournis : « DGF », convection forcée avec flux radiatif et/ou convectif, et ainsi rendre possible certaines innovations relatives aux produits, ou de simuler sur un four pilote unique les cuissons de différents fours industriels.

L'invention concerne ainsi un four modulaire pour produits alimentaires, comprenant un dispositif d'entraînement des produits d'une entrée à une sortie du four, comportant en cascade au moins deux, et de préférence trois modules élémentaires, chaque module élémentaire présentant :
- une voûte de hauteur réglable, qui présente des premiers moyens d'injection d'air et/ou de vapeur pour générer une convection forcée ;
- une sole de hauteur réglable qui présente des deuxièmes moyens d'injection d'air et/ou de vapeur pour générer une convection forcée, caractérisée en ce que chaque module élémentaire présente:
- des brûleurs de sole pour produire une cuisson par conduction et rayonnement, qui sont disposés entre la sole et le dispositif d'entraînement et dont la position en hauteur de chaque brûleur peut être réglable ;
- des brûleurs de voûte pour produire une cuisson par convection et rayonnement, qui sont disposés entre le dispositif d'entraînement et la voûte, et dont la position en hauteur de chaque brûleur est réglable. Les brûleurs de voûte peuvent aussi être séparés de la chambre de cuisson par un écran pour simuler une cuisson indirecte.

Dans chaque module élémentaire, la voûte et/ou la sole peut être réglable en hauteur selon au moins une position haute et une position basse, et éventuellement une position médiane intermédiaire entre la position haute et la position basse.

Le dispositif d'entraînement peut être autonome. Il peut être découplé des modules. Il peut être réversible (fonctionnement dans les deux sens). Il comporte une bande transporteuse pleine ou à grille, éventuellement de largeur variable. Cette bande peut être en métal, plastique, fibre de verre ou autres matériaux.

Dans chaque module élémentaire, les brûleurs de sole et/ou les brûleurs de voûte peuvent être réglables en hauteur selon au moins une position haute et une position basse, et éventuellement une position médiane intermédiaire entre la position haute et la position basse. Les brûleurs peuvent également être orientés dans toutes les directions.

L'invention concerne également un procédé d'utilisation d'un four modulaire tel que défini ci-dessus, pour la cuisson de produits de biscuiterie, caractérisé en ce que le four comporte trois modules élémentaires en cascade dont le premier est mis en oeuvre pour une étape de pré-cuisson et/ou levage, dont le deuxième est mis en oeuvre pour une étape de cuisson, et dont le troisième est mis en oeuvre pour une étape de coloration et/ou séchage du produit.

Selon une première variante, le procédé est caractérisé en ce que, pour la fabrication de crackers, à partir d'une pâte de composition classique le procédé met en oeuvre :
- une bande transporteuse grillagée par exemple de type Ashworth, et
- dans le premier module, positionner la voûte et la sole en leur position haute et mettre en service les brûleurs de sole, lesquels sont ainsi au plus près du disposition d'entraînement, de sorte que le flux radiatif et conductif est accru.
- dans le deuxième module, positionner la voûte en position basse et la sole en position haute et injecter de l'air dans la voûte et la sole pour obtenir un flux convectif accru.
- dans le troisième module, positionner la voûte et les brûleurs de voûte en position basse et actionner les brûleurs de voûte pour former un flux radiafif pour colorer les produits et les sécher.

Selon une deuxième variante, le procédé est caractérisé en ce que, pour la fabrication d'une gênoise à partir d'une pâte de composition connue, le procédé met en oeuvre :
- une bande transporteuse pleine.
- dans le premier module, positionner la voûte et la sole en leur position haute et mettre en service les brûleurs de sole, lesquels sont ainsi, en position haute, au plus près du dispositif d'entraînement, de sorte que le flux conductif est accru avec éventuellement envoi de vapeur surchauffée, par exemple à 350-400°C ;
- dans le deuxième module, positionner les brûleurs de voûte et les brûleurs de sole en position basse et actionner lesdits brûleurs pour obtenir une cuisson combinée par convection naturelle (sans injection d'air par les buses) et rayonnement accru par l'abaissement de la voûte.
- dans le troisième module, positionner la voûte en position basse et la sole en positon haute et injecter de l'air chaud par la voûte et par la sole pour obtenir un séchage par convection forcée.

Selon une troisième variante, le procédé est caractérisé en ce que, pour la fabrication d'un biscuit laminé sec à partir d'une pâte de type connu, par exemple pour fabriquer un biscuit de type « PRINCE » de la Société LU France, le procédé met en oeuvre :
- dans le premier module, positionner la voûte et la sole en une position médiane intermédiaire entre lesdites positions haute et basse, et les brûleurs de voûte et de sole en une position médiane intermédiaire entre lesdites positions haute et basse, et actionner lesdits brûleurs avec injection d'air par la voûte, de manière à favoriser le chauffage par rayonnement tout en maintenant le flux convectif à une valeur suffisamment faible pour éviter de trop chauffer le coeur du produit et éviter le délaminage ;
- dans le deuxième module, positionner la voûte en position basse et la sole en position haute, positionner les brûleurs de voûte en position basse et les brûleurs de sole en position haute, et actionner l'ensemble des brûleurs tout en injectant de l'air par la sole pour augmenter le flux conductif ;
- dans le troisième module, reprendre les mêmes paramètres que pour le premier module, pour obtenir une coloration et un séchage du produit.

Selon une quatrième variante, le procédé est caractérisé en ce que, pour la fabrication d'un produit à partir d'une pâte qui donne des pâtons crus individuels à l'aide d'une rotative, à partir d'une pâte de composition connue (qui est en général relativement grasse pour être démoulable dans une rotative munie d'empreintes en creux) le procédé met en oeuvre :
- dans le premier module, positionner la voûte et la sole en une position médiane intermédiaire entre lesdites positions haute et basse, et les brûleurs de voûte et de sole en une position médiane intermédiaire entre lesdites positions haute et basse, actionner uniquement l'injection d'air par la voûte et la sole, de manière à favoriser le chauffage par convection.
- dans le deuxième module, positionner la voûte et les brûleurs de voûte en position haute, positionner la sole et les brûleurs de sole en position haute, et actionner l'injection d'air par la voûte et la sole de manière à favoriser le chauffage par convection.
- dans le troisième module, reprendre les mêmes paramètres que pour le premier module.

Selon une cinquième variante, le procédé est caractérisé en ce que, pour la cuisson d'une pâte déposée sous forme de pâtons individuels, notamment par extrusion et découpe par coupe-fil le procédé met en oeuvre :
- dans le premier module, positionner la voûte et la sole en une position médiane intermédiaire entre lesdites positions haute et basse, et les brûleurs de voûte en une position médiane intermédiaire entre lesdites position haute et basse, et actionner les brûleurs de voûte de manière à maîtriser l'étalement du produit sans trop le chauffer, grâce à un chauffage combiné radiatif et conductif ;
- dans le deuxième module, positionner la voûte et la sole dans ladite position médiane, et les brûleurs de sole en position médiane, de manière à augmenter le flux énergétique total ;
- dans le troisième module, positionner la sole en sa position haute, et les brûleurs de sole en position médiane, pour obtenir un séchage par entraînement (par opposition au séchage par ébullition) et par ailleurs, positionner la voûte en position basse et les brûleurs de voûte en position médiane pour favoriser la coloration.

D'autres caractéristiques et avantages de l'invention apparaîtront mieux à la lecture de la description ci-après, donnée à titre d'exemple non limitatif, en liaison avec les dessins dans lesquels :
- les figures 1 à 3 représentent en perspective un four modulaire selon l'invention, avec vue éclatée partielle d'un module aux figures 2 et 3 ;
- les figures 4 à 6 illustrent différentes configurations possibles concernant la voûte et les brûleurs de voûte.

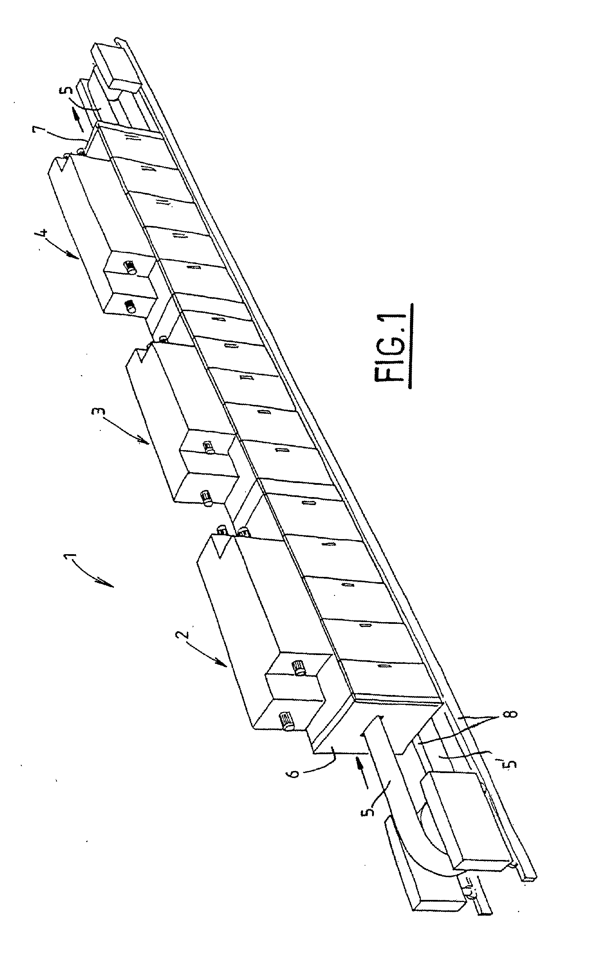

La figure 1 montre un four modulaire présentant en cascade trois modules successivement 2, 3 et 4 entre une entrée 6 et une sortie 7, pour des produits qui sont acheminés par une bande transporteuse 5 qui est avantageusement la même pour les trois modules. Comme le montre la figure 1, le retour 5' de la bande transporteuse 5 s'effectue en dessous des modules posés sur des rails 8. La bande transporteuse 5 est avantageusement bi-directionnelle.

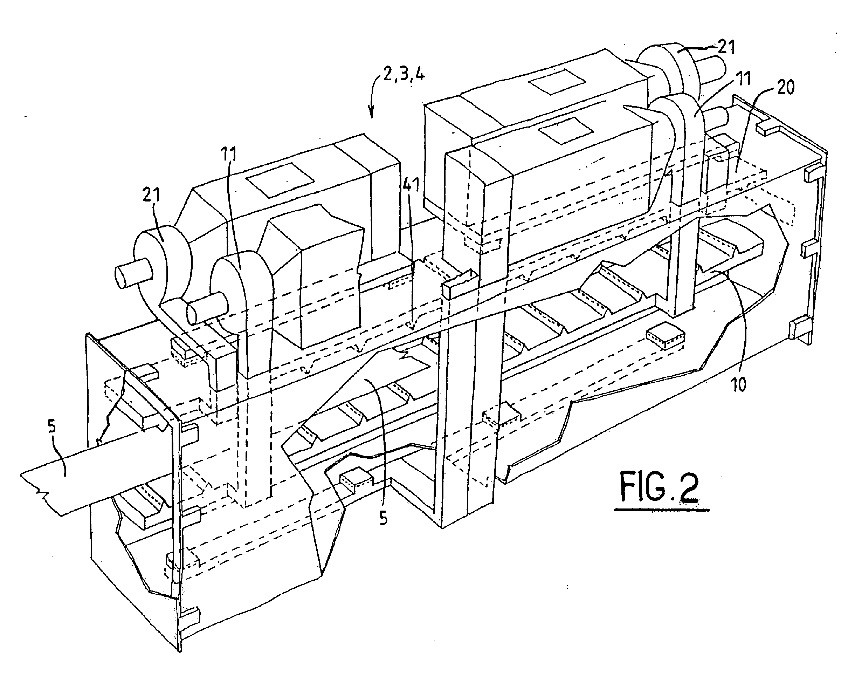

Comme le montre la figure 2, chaque module présente une sole 10 située sous le tapis de transport 5 et réglable en hauteur, et une voûte 20 située au dessus du tapis 5 et réglable en hauteur. Des souffleries 11 et 21 permettent d'insuffler de l'air chaud et/ou de la vapeur dans la sole et/ou dans la voûte pour assurer un chauffage par convection forcée à travers la voûte et/ou la sole. (Les vitesses d'air sont de 0,5 à 50 m/s à la sortie des buses).

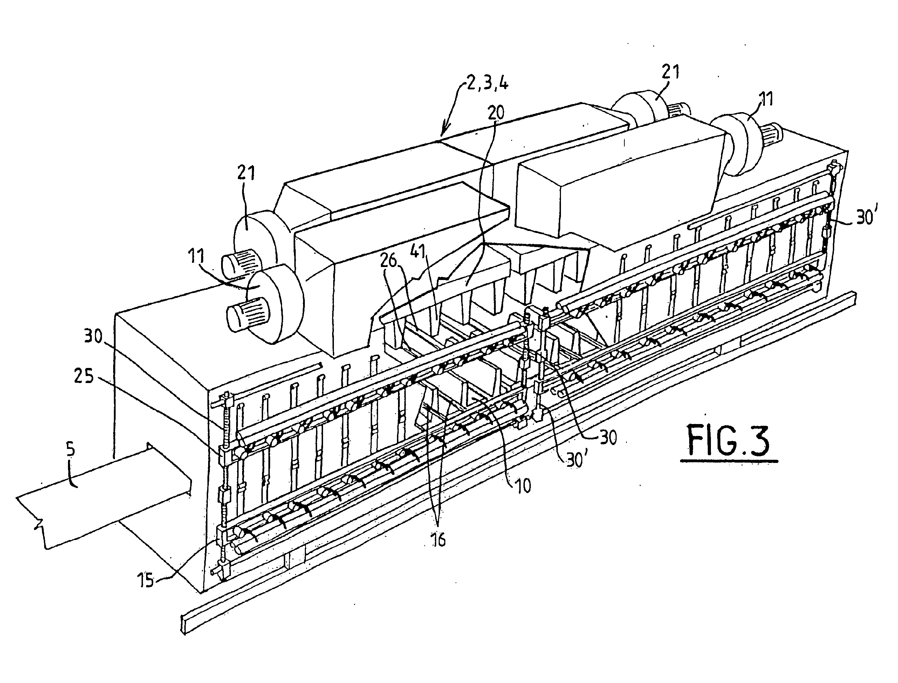

La figure 3 montre les rampes de brûleurs respectivement 15 pour les rampes de brûleurs de sole situés entre la sole 10 et le tapis 5, et 25 pour les rampes de brûleurs de voûte situés entre la voûte 20 et le tapis 5. La position verticale des rampes de brûleurs 15 et 25 est réglable indépendamment à l'aide d'un dispositif à crémaillère qui assure un réglage fin, de manière à ajuster l'angle solide entre les brûleurs 40 et les produits. Ces dispositifs à crémaillère déplacent verticalement des rails qui portent les brûleurs.

On a représenté deux de ces dispositifs à crémaillère 30 et 30', ce qui donne la latitude supplémentaire de deux positions différentes possibles en hauteur l'une dans la première moitié amont du module et l'autre dans la deuxième moitié aval du module.

Les brûleurs 40 sont disposés en des positions réglables le long de rails horizontaux 16 pour les brûleurs de sole et 26 pour les brûleurs de voûte. Sur chacun de ces rails, les brûleurs 40 peuvent être individuellement ajoutés, déplacés, retirés, activés et/ou désactivés. La configuration des brûleurs 40 peut être ainsi adaptée selon un axe vertical. Le nombre des brûleurs peut être augmenté par rapport à une installation classique.

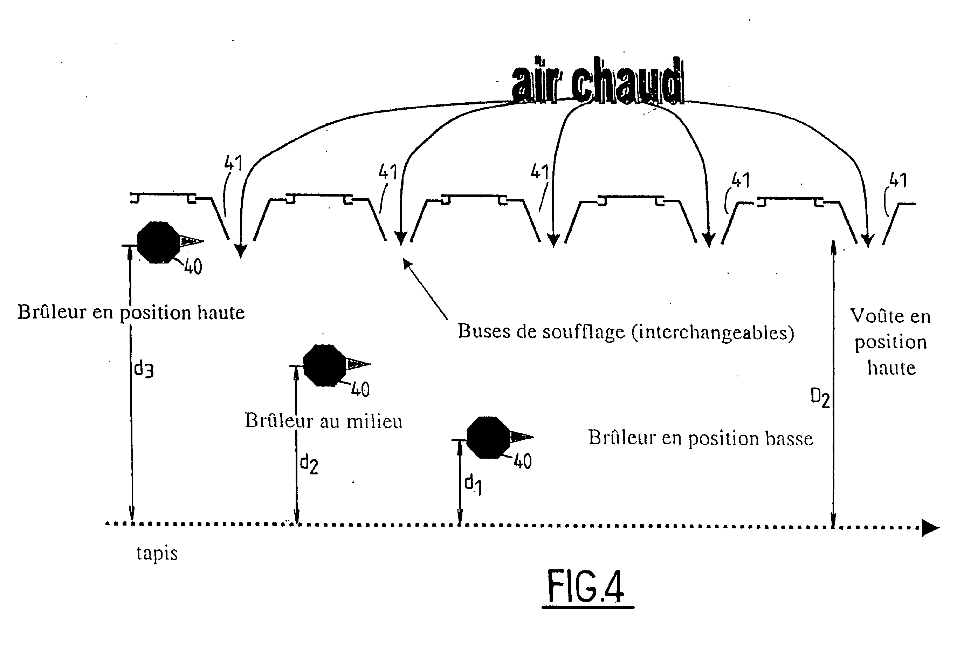

Comme représenté à la figure 4, lorsque la voûte 20 est en position haute (par exemple D₂ = 500 mm), les brûleurs 40 peuvent présenter une position haute (par exemple d₃ = 500 mm) et une position basse (par exemple d₁ = 100 mm), et éventuellement une position intermédiaire (par exemple d₂ = 250 mm).

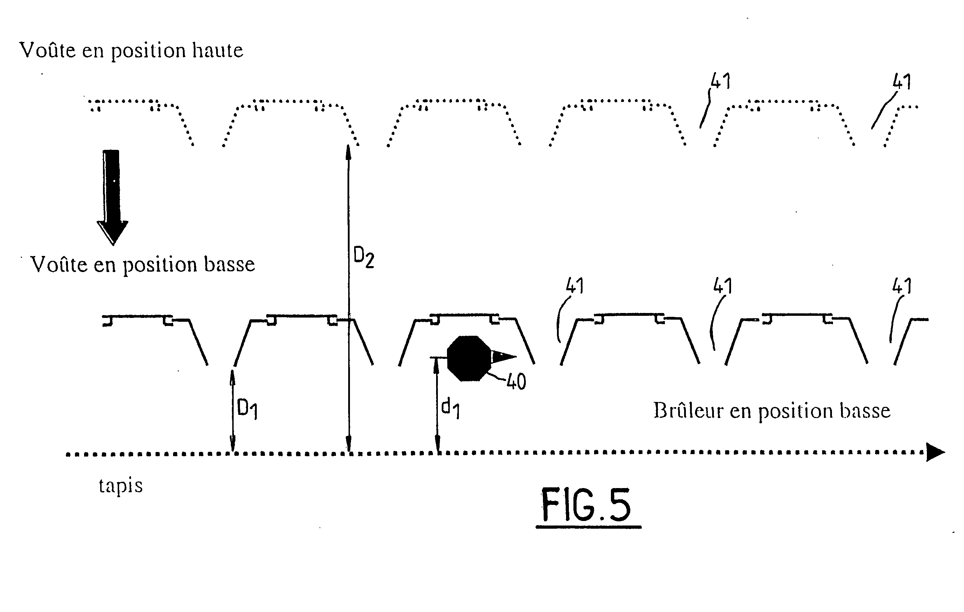

Comme le montre la figure 5, lorsque la voûte 20 est en position basse (par exemple D₁ = 100 mm), les brûleurs 40 de voûte ne peuvent être qu'à leur position basse (d₁ = 100 mm par exemple). Lorsque la voûte 20 est en position intermédiaire, les brûleurs 40 ne peuvent être qu'en position intermédiaire ou basse.

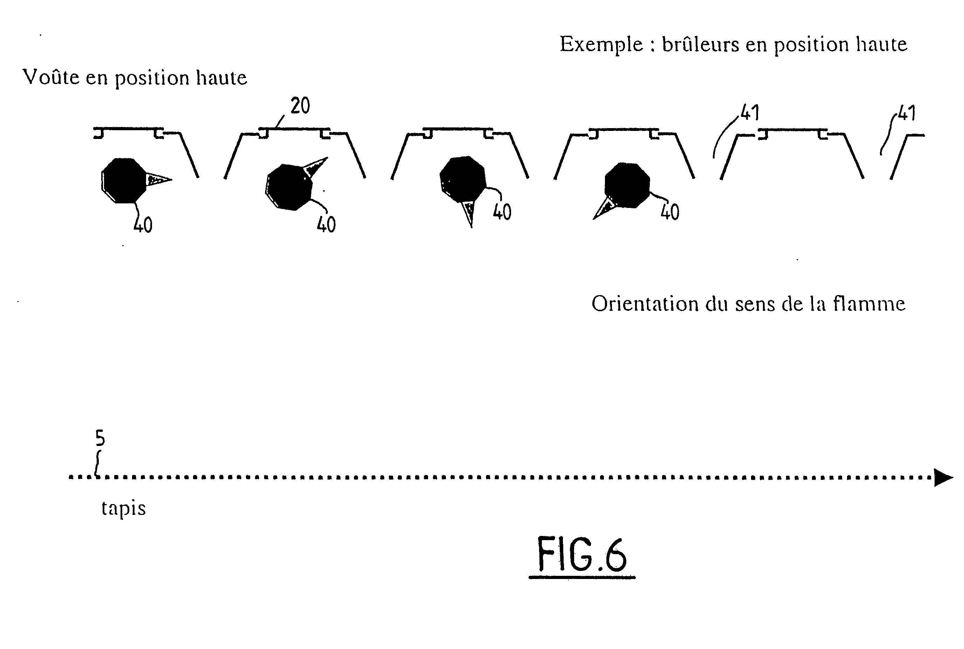

La figure 6 illustre la possibilité d'orientation de la flamme des brûleurs 40, lorsque ceux-ci sont en position haute. Cette orientation est bien sûr également possible lorsque les brûleurs sont en position médiane ou inférieure.

En ce qui concerne la sole 10 et les brûleurs 40 de sole, il est possible de les régler en hauteur, dans des positions en miroir des précédents par rapport au tapis de transport 5. Les conditions sur les positions possibles de la sole et des brûleurs de sole sont les mêmes que pour la voûte et les brûleurs de voûte, en tenant compte de l'effet « miroir » par rapport à la bande 5 (c'est-à-dire que les termes haut et bas sont à inverser).

La convexion forcée par air chaud et/ou vapeur à travers des buses 41 (qui peuvent être de différentes formes) de la voûte 20 et/ou la sole 10 peut avoir les caractéristiques suivantes : une vitesse de 0,5 à 15 m/s en sortie de buse et une température entre 50°C et 400°C.

Le four peut aussi être complété par des modules de chauffage par ondes électro-magnétiques. Les modules peuvent aussi être utilisés en mode refroidissement en substituant l'injection d'air chaud par l'injection d'air froid et sec.

## Revendications

1. Four modulaire pour produits alimentaires, comprenant un dispositif d'entraînement de préférence autonome des produits d'une entrée à une sortie du four, comportant en cascade au moins deux, et de préférence trois modules élémentaires interchangeables (2, 3, 4), chaque module élémentaire présentant : une voûte (20) de hauteur réglable, qui
- une voûte (20) de hauteur réglable, qui présente des premiers moyens d'injection d'air et/ou de vapeur pour générer une convection forcée, **caractérisé en ce que** chaque module élémentaire présente:
- une sole (10) de hauteur réglable qui présente des deuxièmes moyens d'injection d'air et/ou de vapeur pour générer une convection forcée ;
- des brûleurs de sole (15) pour produire une cuisson par conduction et rayonnement, qui sont disposés entre la sole (10) et le dispositif d'entraînement (5) et dont la position en hauteur est réglable ;
- des brûleurs de voûte (25) pour produire une cuisson par convection et rayonnement, qui sont disposés entre le dispositif d'entraînement (5) et la voûte (20), et dont la position en hauteur et l'orientation sont réglables.

2. Four modulaire selon la revendication 1, **caractérisé en ce que**, dans chaque module élémentaire, la voûte (20) est réglable selon au moins une position haute et une position basse.

3. Four modulaire selon une des revendications 1 ou 2, **caractérisé en ce que**, dans chaque module élémentaire, le sole (10) est réglable selon au moins une position haute et une position basse.

4. Four modulaire selon une des revendications précédentes, **caractérisé en ce que** les brûleurs de sole (15) sont réglables selon au moins une position haute et une position basse et de préférence orientables dans toutes les directions.

5. Four modulaire selon une des revendications précédentes, **caractérisé en ce que** les brûleurs de voûte (25) sont réglables selon au moins une position haute et une position basse et de préférence orientables dans toutes les directions.

6. Four modulaire selon une des revendications précédentes, **caractérisé en ce que** les brûleurs (40) sont orientables.

7. Procédé d'utilisation d'un four modulaire selon une des revendications précédentes, pour la cuisson de produits de biscuiterie, **caractérisé en ce que** le four comporte trois modules élémentaires (2, 3, 4) en cascade dont le premier est mis en oeuvre pour une étape de pré-cuisson et/ou levage, dont le deuxième est mis en oeuvre pour une étape de cuisson, et dont le troisième est mis en oeuvre pour une étape de coloration et/ou séchage et/ou refroidissement du produit.

8. Procédé selon la revendication 7, **caractérisé en ce que**, pour la fabrication de crackers, le procédé met en oeuvre une bande transporteuse grillagée en tant que dispositif d'entraînement, et :
- dans le premier module, positionner la voûte (20) et la sole (10) en leur position haute et mettre en service les brûleurs de sole (15), lesquels sont ainsi au plus près du disposition d'entraînement, de sorte que le flux conductif et radiatif est accru ;
- dans le deuxième module, positionner la voûte (20) en position basse et la sole (10) en position haute et injecter de l'air dans la voûte et la sole pour obtenir un flux convectif accru ;
- dans le troisième module, positionner la voûte (20) et les brûleurs de voûte (25) en position basse et actionner les brûleurs de voûte (25) pour former un flux radiatif et convectif pour colorer les produits et les sécher.

9. Procédé selon la revendication 7, **caractérisé en ce que**, pour la fabrication d'une génoise, le procédé met en oeuvre une bande transporteuse pleine en tant que dispositif d'entraînement, et :
- dans le premier module, positionner la voûte (20) et la sole (10) en leur position haute et mettre en service les brûleurs de sole (15), lesquels en position haute sont ainsi au plus près du disposition d'entraînement, de sorte que le flux conductif est maximal, ceci s'accompagnant éventuellement d'envoi de vapeur surchauffée par exemple à 350°C-400°C ;
- dans le deuxième module, positionner les brûleurs de voûte (25) et les brûleurs de sole (15) en position basse et actionner lesdits brûleurs pour obtenir une cuisson combinée par convection naturelle sans injection d'air par lesdits moyens d'injection et rayonnement accru par l'abaissement de la voûte en position basse.
- dans le troisième module, positionner la voûte (20) en position basse et la sole (10) en positon haute et injecter de l'air chaud par la voûte (20) et par la sole (10) pour obtenir un séchage par convection forcée.

10. Procédé selon la revendication 7, **caractérisé en ce que**, pour la fabrication d'un biscuit laminé sec, le procédé met en oeuvre :
- dans le premier module, positionner la voûte (20) et la sole (10) en une position médiane intermédiaire entre lesdites positions haute et basse, et les brûleurs de voûte (25) et de sole (15) en une position médiane intermédiaire entre lesdites positions haute et basse, et actionner lesdits brûleurs avec injection d'air par la voûte (20), de manière à favoriser le chauffage par rayonnement tout en maintenant un flux convectif à une valeur suffisamment faible pour éviter de trop chauffer le coeur du produit et éviter un délaminage ;
- dans le deuxième module, positionner la voûte (20) en position basse et la sole (10) en position haute, positionner les brûleurs de voûte (25) en position basse et les brûleurs de sole (15) en position haute, et actionner l'ensemble des brûleurs (15, 25) tout en injectant de l'air par la sole pour augmenter le flux conductif. ;
- dans le troisième module, reprendre les mêmes paramètres que pour le premier module, pour obtenir une coloration et un séchage du produit.

11. Procédé selon la revendication 7, **caractérisé en ce que**, pour la fabrication d'un produit à partir d'une pâte découpée par une rotative, le procédé met en oeuvre :
- dans le premier module, positionner la voûte (20) et la sole (10) en une position médiane intermédiaire entre lesdites positions haute et basse, et les brûleurs de voûte (25) et de sole (15) en une position médiane intermédiaire entre lesdites positions haute et basse, et actionner uniquement l'injection d'air par la voûte (20) et la sole (10), de manière à favoriser le chauffage par convection.
- dans le deuxième module, positionner la voûte (20) et les brûleurs de voûte (25) en position haute, positionner la sole (10) et les brûleurs de sole (15) en position haute, et actionner l'injection d'air par la voûte (20) et la sole (10) de manière à favoriser le chauffage par convection.
- dans le troisième module, reprendre les mêmes paramètres que pour le premier module.

12. Procédé selon la revendication 7, **caractérisé en ce que**, pour la fabrication d'une pâte déposée sous forme de pâtons individuels, le procédé met en oeuvre :
- dans le premier module, positionner la voûte (20) et la sole (10) en une position médiane intermédiaire entre lesdites positions haute et basse, et les brûleurs de voûte (25) et de sole en une position médiane intermédiaire entre lesdites position haute et basse, et actionner les brûleurs de voûte (25) de manière à maîtriser l'étalement du produit sans trop le chauffer, grâce à un chauffage combiné radiatif et conductif ;
- dans le deuxième module, positionner la voûte (20) et la sole (10) dans ladite position médiane, et les brûleurs de sole (10) en position médiane, de manière à augmenter le flux énergétique total ;
- dans le troisième module, positionner la sole (10) en sa position haute, et les brûleurs de sole (1() en position haute, pour obtenir un séchage par entraînement, et par ailleurs, positionner la voûte (20) en position basse et les brûleurs de voûte (25) en position basse pour favoriser la coloration.

## Claims

1. A modular oven for food products, the oven including a preferably self-propelled conveyor device for entraining products from an inlet to an outlet of the oven, and comprising in cascade at least two, and preferably three, individual interchangeable modules (2, 3, 4), each individual module presenting:
· a ceiling (20) of adjustable height that presents first air and/or steam injection means to generate forced convection, the modular oven being **characterized in that** each individual module presents:
· a floor (10) of adjustable height that presents second air and/or steam injection means for generating forced convection;
· floor burners (15) for baking by conduction and radiation, which burners are disposed between the floor (10) and the conveyor device (5) and are of adjustable vertical position; and
· ceiling burners (25) for baking by convection and radiation, which burners are disposed between the conveyor device (5) and the ceiling (20), and are adjustable in vertical position and in pointing direction.

2. A modular oven according to claim 1, **characterized in that** in each individual module the ceiling (20) is adjustable at least between a high position and a low position.

3. A modular oven according to claim 1 or claim 2, **characterized in that** in each individual module the floor (10) is adjustable between at least a high position and a low position.

4. A modular oven according to any preceding claim, **characterized in that** the floor burners (15) are adjustable between at least a high position and a low position, and are preferably pointable in any direction.

5. A modular oven according to any preceding claim, **characterized in that** the ceiling burners (25) are adjustable between at least a high position and a low position, and are preferably pointable in any direction.

6. A modular oven according to any preceding claim, **characterized in that** the burners (40) are pointable.

7. A method of using a modular oven according to any preceding claim for baking biscuit or cookie products, the method being **characterized in that** the oven comprises three individual modules (2, 3, 4) in cascade, with the first module being used to perform a pre-baking and/or rising step, with the second module being used to perform a baking step, and with the third module being used to perform a step of browning and/or drying and/or cooling the product.

8. A method according to claim 7, **characterized in that** to manufacture crackers, the method implements a gridded conveyor belt as the conveyor device, and implements the following steps:
· in the first module, positioning the ceiling (20) and the floor (10) in their high positions and operating the floor burners (15), which are thus as close as possible to the conveyor device, such that the conductive and radiant flux is increased;
· in the second module, positioning the ceiling (20) in the low position and the floor (10) in the high position and injecting air through the ceiling and the floor to obtain increased convective flux; and
· in the third module, positioning the ceiling (20) and the ceiling burners (25) in the low position and actuating the ceiling burners (25) to provide radiant and convective flux for browning the products and for drying them.

9. A method according to claim 7, **characterized in that** to manufacture sponge, the method implements a solid conveyor belt as the conveyor device, and implements the following steps:
· in the first module, positioning the ceiling (20) and the floor (10) in their high positions and operating the floor burners (15), which in their high position are thus as close as possible to the conveyor device, such that the conductive flux is at its maximum, possibly accompanied by delivering superheated steam, e.g. at 350°C-400°C;
· in the second module, positioning the ceiling burners (25) and the floor burners (15) in their low positions and actuating said burners to obtain baking by natural convection without injecting air via said injector means, in combination with increased radiation by lowering the ceiling into the low position; and
· in the third module, positioning the ceiling (20) in the low position and the floor (10) in the high position, and injecting hot air through the ceiling (20) and the floor (10) to obtain drying by forced convection.

10. A method according to claim 7, **characterized in that** for manufacturing a dry laminated biscuit or cookie, the method implements the following steps:
· in the first module, positioning the ceiling (20) and the floor (10) in middle positions intermediate between said high and low positions, and positioning the ceiling and floor burners (25, 15) in middle positions intermediate between said high and low positions, and actuating said burners with air injection through the ceiling (20) to encourage heating by radiation while maintaining a convective flux at a value that is low enough to avoid excessively heating the product to the core and to avoid delamination;
· in the second module, positioning the ceiling (20) in the low position and the floor (10) in the high position, positioning the ceiling burners (25) in the low position and the floor burners (15) in the high position, and actuating all of the burners (15, 25) while injecting air through the floor to increase conductive flux; and
· in the third module, repeating the same settings as in the first module, to brown and dry the product.

11. A method according to claim 7, **characterized in that** for manufacturing a product from a paste cut by a rotary machine, the method implements the following steps:
· in the first module, positioning the ceiling (20) and the floor (10) in middle positions intermediate between said high and low positions, and positioning the ceiling and floor burners (25, 15) in middle positions intermediate between said high and low positions, and actuating solely air injection through the ceiling (20) and the floor (10) to encourage heating by convection;
· in the second module, positioning the ceiling (20) and the ceiling burners (25) in the high position, positioning the floor (10) and the floor burners (15) in the high position, and actuating air injection through the ceiling (20) and the floor (10) to encourage heating by convection; and
· in the third module, repeating the same settings as in the first module.

12. A method according to claim 7, **characterized in that** for manufacturing paste products deposited in the form of individual pieces, the method implements the following steps:
· in the first module, positioning the ceiling (20) and the floor (10) in middle positions intermediate between said high and low positions, and positioning the ceiling burners (25) and the floor burners in middle positions intermediate between said high and low positions, and actuating the ceiling burners (25) to control spreading of the paste without excessively heating it, by combined radiant and conductive heating;
· in the second module, positioning the ceiling (20) and the floor (10) in said middle positions, and positioning the floor burners (15) in the middle position, to increase the total energy flux; and
• in the third module, positioning the floor (10) in its high position, and the floor burners (15) in the high position to perform drying by entrainment, and also positioning the ceiling (20) in the low position and the ceiling burners (25) in the low position to encourage browning.

## Patentansprüche

1. Ofen in modularer Bauart für Nahrungsmittelprodukte, mit einer Vorrichtung zum vorzugsweise autonomen Fördern der Produkte von einem Eintritt zu einem Austritt des Ofens, welche in Kaskadenanordnung mindestens zwei und bevorzugt drei untereinander austauschbare Einzelmodule (2, 3, 4) aufweist, wobei jedes Einzelmodul folgendes aufweist:
- eine Decke (20) mit einer regulierbaren Höhe, welche erste Einrichtungen zum Einblasen von Luft und/oder Dampf zum Erzeugen einer erzwungenen Konvektion aufweist,
**dadurch gekennzeichnet, dass** jedes Einzelmodul folgendes aufweist:
- eine Sohle (10) mit einer regulierbaren Höhe, die zweite Einrichtungen zum Einblasen von Luft und/oder Dampf zum Erzeugen einer erzwungenen Konvektion aufweist;
- Sohlenbrenner (15) zum Herbeiführen einer Garung mittels Wärmeleitung und Strahlungswärme, die zwischen der Sohle (10) und der Fördervorrichtung (5) angeordnet sind und deren Höhenposition regulierbar ist;
- Deckenbrenner (25) zum Herbeiführen einer Garung mittels Konvektion und Strahlungswärme, die zwischen der Fördervorrichtung (5) und der Decke (20) angeordnet sind und deren Höhenposition und Ausrichtung regulierbar sind.

2. Ofen in modularer Bauart nach Anspruch 1, **dadurch gekennzeichnet, dass** in jedem Einzelmodul die Decke (20) gemäß mindestens einer hohen Stellung und einer niedrigen Stellung regulierbar ist.

3. Ofen in modularer Bauart nach einem der Ansprüche 1 oder 2, **dadurch gekennzeichnet, dass** in jedem Einzelmodul die Sohle (10) gemäß mindestens einer hohen Stellung und einer niedrigen Stellung regulierbar ist.

4. Ofen in modularer Bauart nach einem der vorherigen Ansprüche, **dadurch gekennzeichnet, dass** die Sohlenbrenner (15) gemäß mindestens einer hohen Stellung und einer niedrigen Stellung regulierbar und bevorzugt in alle Richtungen ausrichtbar sind.

5. Ofen in modularer Bauart nach einem der vorherigen Ansprüche, **dadurch gekennzeichnet, dass** die Deckenbrenner (25) gemäß mindestens einer hohen Stellung und einer niedrigen Stellung regulierbar und bevorzugt in alle Richtungen ausrichtbar sind.

6. Ofen in modularer Bauart nach einem der vorherigen Ansprüche, **dadurch gekennzeichnet, dass** die Brenner (40) ausrichtbar sind.

7. Verfahren zur Verwendung eines Ofens in modularer Bauart nach einem der vorherigen Ansprüche zum Garen von Keksprodukten, **dadurch gekennzeichnet, dass** der Ofen in Kaskadenanordnung drei Einzelmodule (2, 3, 4) aufweist, von denen das erste für einen Schritt des Vorgarens und/oder des Aufgehenlassens eingesetzt wird, von denen das zweite für einen Garungsschritt eingesetzt wird, und von denen das dritte für einen Schritt des Bräunens und/oder Trocknens und/oder Abkühlens des Produktes eingesetzt wird.

8. Verfahren nach Anspruch 7, **dadurch gekennzeichnet, dass** das Verfahren für die Herstellung von Crackern ein gitterartiges Transportband als Fördervorrichtung anwendet, sowie:
- in dem ersten Modul, Anordnen der Decke (20) und der Sohle (10) in ihrer hohen Stellung und Betreiben der Sohlenbrenner (15), die sich somit der Fördervorrichtung am Nächsten befinden, um **dadurch** den Wärmeleit- und abstrahlungsfluss zu verstärken;
- in dem zweiten Modul, Anordnen der Decke (20) in der niedrigen Stellung und der Sohle (10) in der hohen Stellung und Einblasen von Luft in die Decke und die Sohle, um einen verstärkten Konvektionsfluss zu erhalten;
- in dem dritten Modul, Anordnen der Decke (20) und der Deckenbrenner (25) in der niedrigen Stellung und Betätigen der Deckenbrenner (25), um einen Abstrahlungs- und Konvektionsfluss zu erhalten und **dadurch** die Produkte zu bräunen und zu trocknen.

9. Verfahren nach Anspruch 7, **dadurch gekennzeichnet, dass** das Verfahren für die Herstellung eines "*Genoise*" bzw. Biskuitkuchens ein massives Transportband als Fördervorrichtung anwendet, und:
- in dem ersten Modul, Anordnen der Decke (20) und der Sohle (10) in ihrer hohen Stellung und Betreiben der Sohlenbrenner (15), die sich somit in ihrer hohen Stellung der Fördervorrichtung am Nächsten befinden, so dass der Wärmeleitfluss maximal ist, gegebenenfalls begleitet von einer Zuführung von Heissdampf mit beispielsweise 350°C-400°C;
- in dem zweiten Modul, Anordnen der Deckenbrenner (25) und der Sohlenbrenner (15) in der niedrigen Stellung und Betreiben der Brenner zum Erhalt einer Garung in Kombination mit einer naturgemäß erhaltenen Konvektion in Abwesenheit einer Einblasung von Luft durch die Einblaseinrichtungen, sowie einer verstärkten Strahlungswärme durch Absenken der Decke in die niedrige Stellung;
- in dem dritten Modul, Anordnen der Decke (20) in der niedrigen Stellung und der Sohle (10) in der hohen Stellung und Einblasen von Heissluft über die Decke (20) und über die Sohle (10), um ein Trocknen mittels erzwungener Konvektion zu erzielen.

10. Verfahren nach Anspruch 7, **dadurch gekennzeichnet, dass** das Verfahren für die Herstellung eines trockenen Schicht-Biskuitkuchens folgendes anwendet:
- in dem ersten Modul, Anordnen der Decke (20) und der Sohle (10) in einer mittigen Zwischenposition zwischen der hohen Stellung und der niedrigen Stellung sowie der Deckenbrenner (25) und der Sohlenbrenner (15) in einer mittigen Zwischenposition zwischen der hohen Stellung und der niedrigen Stellung, und Betreiben der Brenner mit Einblasung von Luft über die Decke (20), um ein Erhitzen mittels Strahlungswärme zu begünstigen und gleichzeitig einen Konvektionsfluss mit einem Wert aufrecht zu erhalten, der ausreichend schwach ist, um ein übermäßiges Erhitzen des Inneren des Produktes zu vermeiden und ein Ablösen zu vermeiden;
- in dem zweiten Modul, Anordnen der Decke (20) in der niedrigen Stellung und der Sohle (10) in der hohen Stellung, Anordnen der Deckenbrenner (25) in der niedrigen Stellung und der Sohlenbrenner (15) in der hohen Stellung, und Betreiben der Gesamtheit von Brennern (15, 25) unter gleichzeitigem Einblasen von Luft über die Sohle, um den Wärmeleitfluss zu verstärken;
- in dem dritten Modul, Anwenden der gleichen Parameter wie für das erste Modul, um eine Bräunung und ein Trocknen des Produktes zu erzielen.

11. Verfahren nach Anspruch 7, **dadurch gekennzeichnet, dass** das Verfahren für die Herstellung eines Produktes ausgehend von einem mittels einer Rotationsmaschine portionierten Teiges folgendes anwendet:
- in dem ersten Modul, Anordnen der Decke (20) und der Sohle (10) in einer mittigen Zwischenposition zwischen der hohen Stellung und der niedrigen Stellung und der Deckenbrenner (25) und Sohlenbrenner (15) in einer mittigen Zwischenposition zwischen der hohen Stellung und der niedrigen Stellung, und Veranlassen einzig des Einblasens von Luft über die Decke (20) und die Sohle (10), um die Erwärmung mittels Konvektion zu begünstigen.
- in dem zweiten Modul, Anordnen der Decke (20) und der Deckenbrenner (25) in der hohen Stellung, Anordnen der Sohle (10) und der Sohlenbrenner (15) in der hohen Stellung, und Veranlassen des Einblasens von Luft über die Decke (20) und die Sohle (10), um die Erwärmung mittels Konvektion zu begünstigen.
- in dem dritten Modul, Anwenden der gleichen Parameter wie für das erste Modul.

12. Verfahren nach Anspruch 7, **dadurch gekennzeichnet, dass** das Verfahren für die Herstellung eines in Form von einzelnen Teiglingen abgelegten Teiges folgendes anwendet:
- in dem ersten Modul, Anordnen der Decke (20) und der Sohle (10) in einer mittigen Zwischenposition zwischen der hohen Stellung und der niedrigen Stellung sowie der Deckenbrenner (25) und der Sohlenbrenner in einer mittigen Zwischenposition zwischen der hohen und der niedrigen Stellung, und Betreiben der Deckenbrenner (25), um die Ausdehnung des Produktes durch eine kombinierte Erwärmung mittels Wärmestrahlung und -leitung zu steuern, ohne es übermäßig zu erhitzen;
- in dem zweiten Modul, Anordnen der Decke (20) und der Sohle (10) in der mittigen Position und der Sohlenbrenner (10) in der mittigen Position, um den Energiefluss insgesamt zu verstärken;
- in dem dritten Modul, Anordnen der Sohle (10) in ihrer hohen Stellung und der Sohlenbrenner (15) in der hohen Stellung, um ein Trocknen mittels Förderung zu erhalten, und ferner Anordnen der Decke (20) in der niedrigen Stellung und der Deckenbrenner (25) in der niedrigen Stellung, um die Bräunung zu begünstigen.
